# EUROPÄISCHE PATENTANMELDUNG

(11) **EP 0 614 036 A1**
(43) Veröffentlichungstag der Anmeldung: **07.09.1994**
(21) Anmeldenummer: 94103135.3
(22) Anmeldetag: 02.03.1994
(51) Int. Cl.: F16M 11/06

(54) **Deckenstativ**

(30) Priorität: 04.03.1993 DE 4306805
(71) Anmelder: Kreuzer GmbH + Co. OHG, D-82178 Puchheim (DE)
(72) Erfinder: Martin, Karl-Heinz, D-82284 Grafrath (DE)
(74) Vertreter: Prüfer, Lutz H., Dipl.-Phys.

(57) **Zusammenfassung**

Es wird ein Deckenstativ (1) mit einer Deckenhalterung (2), wenigstens einem ersten Stativarm (3) und einer von einem Stativarm getragenen Säule (5) zum Tragen von Geräten und ähnlichem geschaffen, bei dem die einzelnen Teile jeweils durch ein Drehgelenk (6) schwenkbar verbunden sind. Jedes Drehgelenk (6) weist ein in vertikaler Richtung gesehen erstes Lagerteil (9) und ein damit zusammenwirkendes zweites Lagerteil (10) auf. Damit eine die Relativbewegung der Teile zueinander bremsende Bremseinrichtung in einfacher konstruktiver Weise einbaubar und zum Warten ausbaubar ist, weist vorzugsweise das untere Lagerteil (10) eine koaxial zur Schwenkachse des Drehgelenkes (6) ausgerichtete innenzylindrische Fläche (11) mit einem ersten Durchmesser auf. Es ist eine mit dem anderen Lagerteil (9) verbundene Bremseinrichtung (14) vorgesehen, die zum Bremsen mit der innenzylindrischen Fläche (11) in Bremseingriff gelangt.

## Beschreibung

Die Erfindung betrifft ein Deckenstativ nach dem Oberbegriff des Patentanspruches 1.

Ein solches Deckenstativ ist beispielsweise aus der DE 37 01 172 A1 bekannt und dient insbesondere zur Aufnahme von schweren medizinischen Geräten in Operationssälen und ähnlichem. Bei solchen Stativen ist es wichtig, eine Bremse zum Abbremsen einer unbeabsichtigten Schwenkbewegung vorzusehen. Bei bekannten Deckenstativen ist die erforderliche Bremskonstruktion und insbesondere ihre Wartung relativ kompliziert. Außerdem sind die Bremsen zu unnachgiebig beim Anprall von Gegenständen oder von im Operationssaal Beschäftigten, was zu Schäden oder Verletzungen führen kann.

Aufgabe der Erfindung ist es, ein Deckenstativ der eingangs beschriebenen Art zu schaffen, welches eine Bremskonstruktion mit einfachem Aufbau, einfacher Wartungsmöglichkeit und einer gewissen Elastizität aufweist.

Diese Aufgabe wird durch das in Patentanspruch 1 gekennzeichnete Deckenstativ gelöst.

Weiterbildungen der Erfindung sind in den Unteransprüchen gekennzeichnet.

Weitere Merkmale und Zweckmäßigkeiten der Erfindung ergeben sich aus der Beschreibung eines Ausführungsbeispieles anhand der Figuren.

Von den Figuren zeigen:

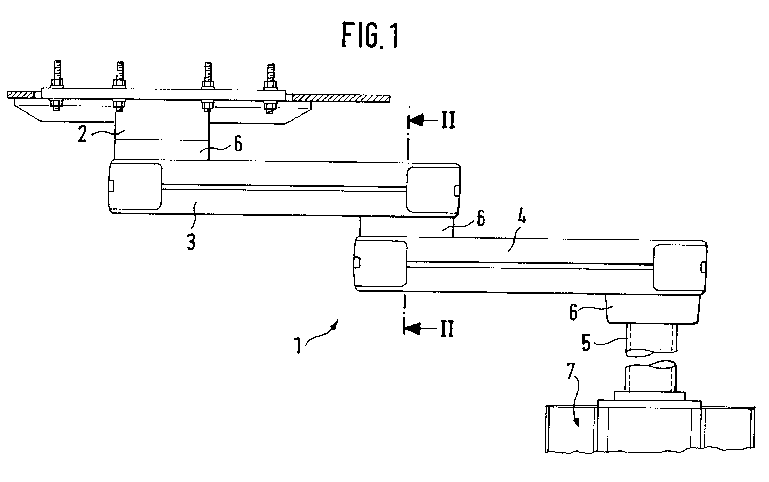

- Fig. 1: eine Seitenansicht eines Deckenstatives;
- Fig. 2: einen Schnitt entlang der Linie II-II in Fig. 1;
- Fig. 3: einen Schnitt entlang der Linie III-III in Fig. 2;
- Fig. 4: eine Draufsicht auf einen Teil eines Ringsegmentes in größerem Maßstab; und
- Fig. 5: Details aus Fig. 2 in abgewandelter Ausführungsform in größerem Maßstab.

Das Deckenstativ 1 weist eine Deckenhalterung 2, einen ersten Stativarm 3, einen zweiten Stativarm 4, eine mit diesem verbundene Säule 5 und die Deckenhalterung mit dem ersten Stativarm und die beiden Stativarme und Säule miteinander jeweils verbindende Drehgelenke 6 auf. Von der Säule 5 wird ein schematisch angedeutetes medizinisches Gerät 7 getragen. Dieses wird durch im Inneren der Stativarme und -gelenke verlaufende Gas- und Medienschläuche, Stark- und Schwachstrom-Leitungen versorgt. Die Stativarme und die Säule sind durch die Drehgelenke jeweils um eine vertikale Schwenkachse 8 schwenkbar bzw. drehbar.

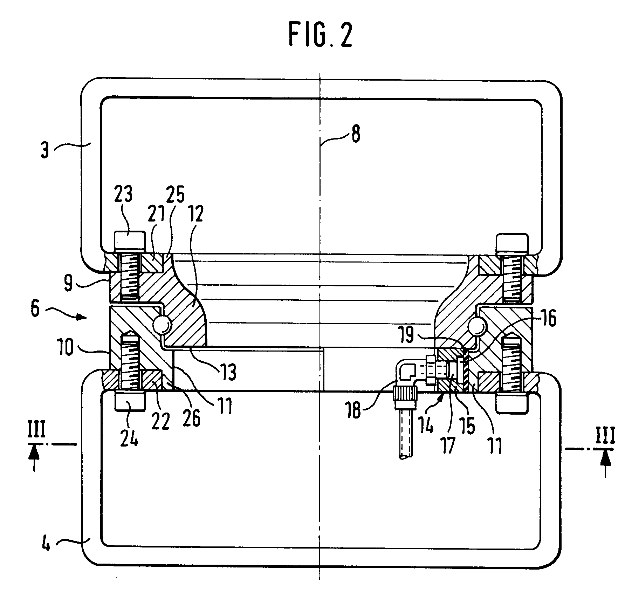

Im weiteren wird das Drehgelenk 6 anhand der in Figur 2 gezeigten Verbindung zwischen dem ersten Schwenkarm un dem zweiten Schwenkarm beschrieben. Dabei ist der Aufbau für alle Drehgelenke gleich. Das Drehgelenk 6 weist ein mit dem oberen ersten Stativarm 3 verbundenes erstes Lagerteil 9 und ein mit diesem Zusammenwirkendes, mit dem untenliegenden zweiten Stativarm 4 verbundenes zweites Lagerteil 10 auf. Das zweite Lagerteil 10 weist eine innenzylindrische Fläche 11 mit einem vorbestimmten ersten Durchmesser auf.

Das zugehörige erste Lagerteil weist einen an die Fläche 11 angrenzenden hohlzylindrischen Abschnitt 12 auf mit einem zweiten Druchmesser, der kleiner ist als der erste Durchmesser. Auf der zum zweiten Lagerteil hin gerichteten unteren Seite weist der Abschnitt 12 eine sich senkrecht zur Schwenkachse 8 erstreckende Fläche 13 auf.

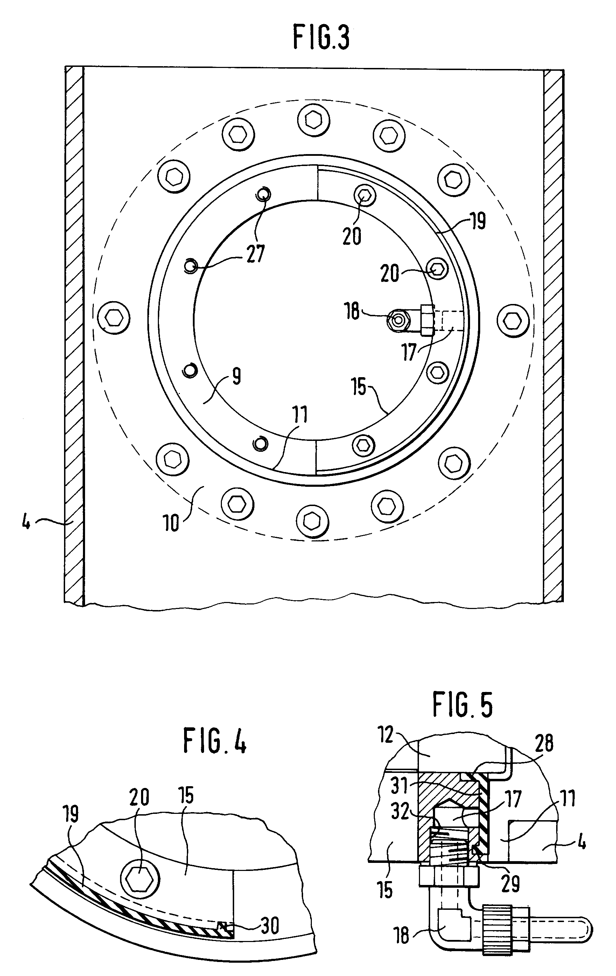

Wie am besten aus Fig. 2 ersichtlich ist, ist eine Bremseinrichtung 14 vorgesehen. Diese umfaßt, wie am besten aus Fig. 3 ersichtlich ist, ein Ringsegment 15. Dieses weist auf seiner der Fläche 11 zugewandten Außenseite eine sich über die gesamte Umfangsfläche des Ringsegmentes erstreckende Bremsmembrane 19 aus Gummi auf, welche nur in der am besten aus den Figuren 4 und 5 ersichtlichen Weise sich entlang des oberen und unteren Längsrandes und entlang der beiden Querränder des Ringsegmentes 15 verlaufende Rillen mit seinen Längsrändern 28, 29 und seinen Querrändern 30 mit dem Ringsegment aus Leichtmetall durch Vulkanisieren luftdicht verbunden ist, während der größte Teil 31 der Bremsmembrane 19 an der Umfangsfläche lediglich anliegt. An beliebiger Stelle des Umfangs befindet sich eine radial zulaufende Bohrung 17, welche in der in Fig. 2 gezeigten Weise mit einem Anschlußstück 18 einer Druckmittelleitung bzw. in der in Fig. 5 gezeigten Weise mit einer axialen, außerhalb des inneren Segmentumfanges befindlichen Gewinde-Sackbohrung 32 verbunden ist. Zu letzterer ist eine schematisch angedeutete Pneumatik-Verschraubung mit Schlauchleitung 18 luftdicht eingeschraubt. Das Ringsegment 15 ist durch Schrauben 20 an der Fläche 13 des ersten Lagerteiles 9 auswechselbar angeschraubt. Die Breiten der Flächen 13 und des Ringsegmentes 15 in radialer Richtung sind identisch.

Das Ringsegment ist in der am besten aus Fig. 3 ersichtlichen Weise durch Schrauben 20 an der Fläche 13 des ersten Lagerteiles auswechselbar angeschraubt, um es ohne Behinderung durch Schläuche und Kabel vollständig herausnehmen zu können, z. B. um dieses erste Bremselement durch ein zweites zu ersetzen.

Wie am besten aus Fig. 2 ersichtlich ist, weisen die beiden Stativarme 3 und 4 zur Schwenkachse 8 koaxial angeordnete kreisförmige Ausnehmungen mit einem dritten Durchmesser und daran angrenzende kreisförmige, sich radial erstreckende Widerlagerflächen aufweisende Verbindungsflansche 21, 22 auf. Die damit zu verbindenden Lagerteile 9, 10 weisen den Verbindungsflanschen 21, 22 jeweils entsprechende ringförmige sich in radialer Richtung erstreckende Widerlagerflächen auf, mit denen sie an den jeweiligen Flansch anliegen und mittels Schrauben 23, 24 jeweils fest verbunden sind. Zusätzlich weist jedes Lagerteil einen kragenartigen zylindrischen Abschnitt 25, 26, der jeweils in die von dem ringförmigen Verbindungsflansch begrenzte Ausnehmung hineinragt, auf. Jeder kragenartige zylindrische Abschnitt 25, 26 weist eine äußere Zylinderfläche auf, deren Durchmesser so in Abhängigkeit vom dritten Durchmesser der jeweiligen Ausnehmung bemessen ist, daß das Lagerteil mit seinem kragenartigen zylindrischen Abschnitt im Paßsitz mit dem jeweiligen Flansch 21 bzw. 22 verbunden ist. Durch das Vorsehen dieser kragenartigen zylindrischen Abschnitte 25, 26 werden von dem jeweiligen Stativarm auf das Lager ausgeübte Kippkräfte aufgenommen.

Im Betrieb folgt die Betätigung der Bremseinrichtung 14 durch Beaufschlagen über die mit dem Anschlußstück 18 verbundene Leitung. Dabei wirkt die Membrane als Bremsfläche direkt auf die innenzylindrische Fläche und bewirkt infolge ihrer Elastizität eine erwünschte Nachgiebigkeit der Arme bei unbeabsichtigtem Aufprall. Zur Wartung oder zum Austausch der Bremseinrichtung sind lediglich die in Fig. 3 gezeigten vier Schrauben 20 zu lösen, um die Bremseinrichtung vollständig herausnehmen zu können. Entsprechend einfach ist der Einbau des gewarteten oder ausgetauschten Bremselementes. Für den Fall, daß es gewünscht ist, ein zweites Bremselement vorzusehen, kann dieses in der gleichen Weise im zweiten Halbkreis unter Verwendung dort bereits vorgesehener Bohrungen 27 eingebaut werden.

Im obigen Ausführungsbeispiel ist die Einrichtung anhand des zwischen den beiden Stativarmen vorgesehenen Drehgelenkes beschrieben. Das Drehgelenk zur Verbindung von Deckenhalterung und erstem Stativarm hat den gleichen Aufbau.

Wie aus Fig. 2 zu sehen ist, ist die Bremseinrichtung 14 am oberen Lagerteil 9 befestigt und wirkt mit dem unteren Lagerteil 10 zusammen. Dadurch wird erreicht, daß Abriebteile nicht in das Lager fallen können.

## Patentansprüche

1. Deckenstativ (1) mit einer Deckenhalterung (2), wenigstens einem ersten Stativarm (3) und einer von einem Stativarm getragenen Säule (5) zum Tragen von Geräten (6) und ähnlichem, und einem Drehgelenk (6) zwischen der Deckenhalterung (2) und dem ersten Stativarm (3) bzw. dem ersten Stativarm (3) und einem weiteren Stativarm (4) bzw. der Säule zum schwenkbaren Verbinden, wobei das Drehgelenk (6) ein mit dem in vertikaler Richtung gesehen unteren Tragteil verbundenes zweites Lagerteil (10) und eine damit zusammenwirkende Bremseinrichtung (14) aufweist, dadurch gekennzeichnet, daß das Drehgelenk ein mit dem in vertikaler Richtung gesehen oberen Tragteil verbundenes erstes Lagerteil (9) aufweist und daß das untere Lagerteil (10) eine koaxial zur Schwenkachse des Drehgelenkes (8) ausgerichtete innenzylindrische Fläche (11) mit einem ersten Durchmesser aufweist und daß die Bremseinrichtung (14) mit dem anderen Lagerteil (9) verbunden ist und zum Bremsen mit der innenzylindrischen Fläche (11) in Bremseingriff gelangt.

2. Deckenstativ (1) mit einer Deckenhalterung (2), wenigstens einem ersten Stativarm (3) und einer von einem Stativarm getragenen Säule (5) zum Tragen von Geräten (6) und ähnlichem, und einem Drehgelenk (6) zwischen der Deckenhalterung (2) und dem ersten Stativarm (3) bzw. dem ersten Stativarm (3) und einem weiteren Stativarm (4) bzw. der Säule zum schwenkbaren Verbinden, wobei das Drehgelenk (6) ein mit dem in vertikaler Richtung gesehen oberen Tragteil verbundenes erstes Lagerteil und eine damit zusammenwirkende Bremseinrichtung (14) aufweist, dadurch gekennzeichnet, daß das Drehgelenk ein mit dem in vertikaler Richtung gesehen unteren Tragteil verbundenes zweites Lagerteil aufweist und daß das obere Lagerteil eine koaxial zur Schwenkachse des Drehgelenkes (8) ausgerichtete innenzylindrische Fläche mit einem ersten Durchmesser aufweist und daß die Bremseinrichtung (14) mit dem anderen Lagerteil (10) verbunden ist und zum Bremsen mit der innenzylindrischen Fläche in Bremseingriff gelangt.

3. Deckenstativ nach Anspruch 1, dadurch gekennzeichnet, daß das obere Lagerteil (9) einen Abschnitt (12) aufweist, dessen Abstand von der Schwenkachse (8) kleiner als der erste Durchmesser ist, an dem die Bremseinrichtung (14) befestigt ist.

4. Deckenstativ nach Anspruch 3, dadurch gekennzeichnet, daß der Abschnitt (12) eine sich im wesentlichen senkrecht zur Schwenkachse (8) erstreckende Fläche (13) ist.

5. Deckenstativ nach einem der Ansprüche 1, 3 oder 4, dadurch gekennzeichnet, daß die Bremseinrichtung (14) als mit dem oberen Lagerteil (9) verbundenes Ringsegment (15) ausgebildet ist.

6. Deckenstativ nach Anspruch 5, dadurch gekennzeichnet, daß das Ringsegment (15) auf seiner der innenzylindrischen Fläche (11) zugewandten Außenseite eine die Außenseite abdeckende Bremsmembran (19) aufweist, die auf ihrer dem Ring zugewandten Innenseite mit einer Bohrung (17) zum Verbinden mit einer Pneumatikleitung (18) und zum Beaufschlagen mit Druckluft verbunden ist.

7. Deckenstativ nach einem der Ansprüche 1 bis 6, dadurch gekennzeichnet, daß die Deckenhalterung (2) und der erste Stativarm (3) bzw. die mit dem Drehgelenk (6) verbundenen Stativarme an der Stelle des jeweiligen Lagerteiles eine kreisrunde Ausnehmung und die Lagerteile (9, 10) jeweils eine mit dem angrenzenden Teil (21, 22) zu verbindende Fläche und einen sich im wesentlichen parallel zur Schwenkachse (8) erstreckenden Kragen (25, 26) zum Anliegen an der Wandung der jeweiligen Ausnehmung und zum Aufnehmen von Kippkräften aufweisen.

8. Deckenstativ nach Anspruch 5, dadurch gekennzeichnet, daß das Ringsegment (15) auf seiner der innenzylindrischen Fläche (11) zugewandten Außenseite durch eine an dessen Umfangs- und Seitenkanten mit dem Ringsegment (15) luftdicht verbundene Gummiplatte einen Membranzylinder bildet, welcher über ein radial verlaufendes Sackloch und axial verlaufende Sack-Gewindebohrung mit Druckluft beaufschlagt wird.
